# EUROPÄISCHE PATENTANMELDUNG

(11) **EP 1 460 528 A2**
(43) Veröffentlichungstag der Anmeldung: **22.09.2004**
(21) Anmeldenummer: 04450065.0
(22) Anmeldetag: 15.03.2004
(51) Int. Cl.: G06F 3/033

(54) **Mensch-Maschine-Interface**

(30) Priorität: 19.03.2003 AT 4412003
(71) Anmelder: FREQUENTIS GmbH, 1120 Wien (AT)
(72) Erfinder: Fischer, Walter, 1230 Wien (AT)
(74) Vertreter: Wildhack, Helmut, Dipl.-Ing. Dr.

(57) **Zusammenfassung**

Die Erfindung betrifft ein Mensch-Maschine-Interface (MMI), einen Controller (1), ein Display (4) mit einer Bildfläche (5) zur Darstellung von Bildinformation und eine vor der Bildfläche angeordnete, transparente, berührungs- und/oder druckempfindliche Einrichtung (6) umfassend, wobei der Controller (1) Bild-Steuersignale (7) an das Display (4) überträgt, um die Bildinformation als Bild auf der Bildfläche darzustellen, und Eingabesignale (8) von der berührungs- und/oder druckempfindlichen Einrichtung (6) empfängt, gekennzeichnet durch einen mit dem Controller kommunizierenden Vergrößerungs-Schalter (9, 11), der eine solche Größe aufweist, dass er von einer einen Schutzhandschuh tragenden Bedienperson sicher betätigt werden kann, wobei Betätigungssignale des Vergrößerungs-Schalters (9, 11) den Controller in einen Vergrößerungs-Modus schalten, in dem er zumindest einen Ausschnitt der auf der Bildfläche darzustellenden Bildinformation vergrößert darstellt, wobei der Vergrößerungsfaktor vorzugsweise zumindest 30%, noch bevorzugter zumindest 50% beträgt.

## Beschreibung

Die Erfindung betrifft ein Mensch-Maschine-Interface, das als Schnittstelle zur Bedienung eines Gerätes, einer Anlage oder eines technischen Systems durch eine Bedienperson Verwendung findet. Solche Mensch-Maschine-Interfaces sind in zahlreichen Ausgestaltungen bekannt und finden überall dort Verwendung, wo einerseits die Eingabe von Signalen oder Daten an ein Gerät, ein System oder eine Anlage durch eine Bedienperson erforderlich ist und andererseits der Bedienperson vom Gerät, System oder der Anlage bereitgestellte Informationen angezeigt werden müssen. Mensch-Maschine-Interfaces sind beispielsweise unverzichtbarer Bestandteil in der Visualisierungstechnik, bei Leitwarten, Sicherheitssystemen etc.

In jüngerer Zeit wurden als Mensch-Maschine-Interface sogenannte Touch-Panels oder Touch-Screens eingesetzt, die im Allgemeinen einen Controller, ein Display mit einer Bildfläche zur Darstellung von Bildinformation und eine vor der Bildfläche angeordnete, transparente, berührungs- und/oder druckempfindliche Einrichtung umfassen, wobei der Controller Bild-Steuersignale an das Display überträgt, um die erwünschten Bildinformationen auf der Bildfläche darzustellen, und Eingabesignale von der berührungsund/oder druckempfindlichen Einrichtung empfängt, diese auswertet und entsprechende Steuersignale an das mit dem Controller verbundene, zu steuernde Gerät oder System weiterleitet. Vorteilhaft an diesen Touch-Panels ist vor allem ihre gute Parametrierbarkeit und Anpassbarkeit an verschiedene Betriebszustände der über sie zu steuernden Geräte, Systeme und Anlagen. Als Displays finden Flüssigkristallanzeigen, Kathodenstrahlröhren, Plasma-Displays etc. Anwendung. Die berührungs- und/oder druckempfindliche Einrichtung arbeitet zumeist nach dem Prinzip eines durch Druck veränderbaren elektrischen Widerstandes oder dem Prinzip der Erfassung von Infrarot-Strahlung.

Touch-Panels sind mittlerweile so ausgereift, dass ihre Bedienung unter normalen Umgebungsbedingungen weitgehend fehlerfrei möglich ist. Problematisch bleibt jedoch ihre Bedienung bei aggressiven oder für den Menschen gefährlichen Umgebungsbedingungen, bei denen eine Bedienperson Schutzhandschuhe oder einen Schutzanzug tragen muss. Solche aggressive Umgebungsbedingungen können in Notfall- und Krisensituationen auftreten, wie sie bei Bränden, Austreten aggressiver Dämpfe oder Strahlung und dergl. herrschen. In solchen Situationen ist es oftmals erforderlich, dass die Bedienperson an ihrem Platz bleibt und weiterhin ein Gerät oder eine Anlage bedient, um Schaden an Personen und Gütern zu verhindern oder um lebenswichtige Systeme aufrecht zu erhalten. Beispielsweise muss auch bei Eintreten eines der oben erwähnten Notfälle aufgrund von Unfällen, oder - wie in jüngerer Zeit verstärkt zu befürchten - bei Terrorangriffen oder im Kriegsfall ein Flugsicherungs- und -leitsystem weiterhin betrieben werden, um katastrophale Flugzeugabstürze zu verhindern. Die Bedienperson, im zitierten Beispiel ein Flugüberwachungsbeamter oder Soldat, wird in einem solchen Fall einen Schutzanzug mit integrierten Handschuhen zum Schutz vor chemischen Stoffen, hohen Temperaturen und/oder schädlicher Strahlung tragen. Allerdings wird durch die Schutzhandschuhe die Handfertigkeit der Bedienperson gravierend herabgesetzt. Genauer gesagt, ist es mit Handschuhen in vielen Fällen unmöglich, Tasten und Schalter verlässlich zu bedienen. Dies ist leicht nachvollziehbar, wenn man bedenkt, dass die Größe der Tasten und Schalter meist jenen einer Computer-Tastatur entspricht. Bei sicherheitskritischen Anwendungen von Mensch-Maschine-Interfaces, wie bei den erwähnten Flugsicherungssystemen, aber auch bei Verkehrsleitsystemen, Leitwarten in Kraftwerken etc. ist eine solche durch das Tragen von Schutzhandschuhen eingeschränkte Bedienbarkeit der Systeme aufgrund des damit verbundenen Sicherheitsrisikos nicht tragbar.

Die vorliegende Erfindung hat sich zum Ziel gesetzt, die erwähnten Probleme zu lösen oder zumindest zu mildern.

Sie erreicht dieses Ziel durch Weiterbildung eines Mensch-Maschine-Interface (MMI), das einen Controller, ein Display mit einer Bildfläche zur Darstellung von Bildinformation und eine vor der Bildfläche angeordnete, transparente, berührungs- und/oder druckempfindliche Einrichtung umfasst, wobei der Controller Bild-Steuersignale an das Display überträgt, um die Bildinformationen als Bild auf der Bildfläche darzustellen, und Eingabesignale von der berührungs- und/oder druckempfindlichen Einrichtung empfängt, wobei erfindungsgemäß ein mit dem Controller kommunizierender Vergrößerungs-Schalter vorgesehen ist, der eine solche Größe aufweist, dass er von einer einen Schutzhandschuh tragenden Bedienperson sicher betätigt werden kann, wobei Betätigungssignale des Vergrößerungs-Schalters den Controller in einen Vergrößerungs-Modus schalten, in dem zumindest ein Ausschnitt der am Display darzustellenden Bildinformation vergrößert dargestellt wird, wobei der Vergrößerungsfaktor vorzugsweise zumindest 30%, noch bevorzugter zumindest 50% beträgt.

Das erfindungsgemäße Mensch-Maschine-Interface ermöglicht somit die sichere Bedienung des über das Mensch-Maschine-Interface zu steuernde Gerät oder System auch unter widrigen Umgebungsbedingungen. Sein bevorzugter Einsatz liegt in sicherheitskritischen Systemen und im Krisenfall-Management. Besonders gut eignet sich das erfindungsgemäße Mensch-Maschine-Interface für den Einsatz im militärischen Bereich. Gerade dann, wenn beispielsweise aufgrund eines ABC-Alarms, d.h. bei (erwarteten) Angriffen mit Atom-, bakteriellen oder chemischen Waffen, die Soldaten in Schutzkleidung arbeiten müssen, und ihnen durch die Schutzhandschuhe die Bedienung von Geräten erschwert wird, kann die vorliegende Erfindung ihre Stärken ausspielen.

Nach Betätigung des Vergrößerungs-Schalters werden zumindest wichtige Teile der Bildinformation vergrößert auf der Bildfläche dargestellt und dadurch leichter ablesbar und gegebenenfalls bedienbar. Beispielsweise zeigt die vergrößert dargestellte Bildinformation eine Landkarte, eine alphanumerische Tastatur, die aufgrund der Vergrößerung wesentlich leichter bedient werden kann, oder Steuertasten, die vergrößert ebenfalls wesentlich leichter zu bedienen sind.

Um die Bedienbarkeit des erfindungsgemäßen Mensch-Maschine-Interface mit Schutzhandschuhen sicherzustellen, sollte die Betätigungsfläche des Vergrößerungs-Schalters zumindest 2 cm, vorzugsweise zumindest 3 cm im Durchmesser betragen. In Abhängigkeit vom Einsatzzweck kann der Durchmesser der Betätigungsfläche auch noch größer gewählt werden.

In einer Ausgestaltung der Erfindung ist der Vergrößerungs-Schalter als elektromechanischer Schalter oder Taster ausgebildet. Wesentlich dabei ist, dass die Betätigungsfläche ausreichend groß bemessen ist, wie oben ausgeführt. Die Taste kann beispielsweise in der Art eines bekannten Notstopp-Schalters ausgeführt sein. Es ist weiters nicht erforderlich, dass der Vergrößerungs-Schalter direkt am Mensch-Maschine-Interface montiert ist. Er kann vielmehr auch davon beabstandet angeordnet sein und über drahtgebundene oder drahtlose Verbindung oder eine Bussystem mit dem Controller kommunizieren.

Die Verwendung eines Touch-Panels im erfindungsgemäßen Mensch-Maschine-Interface ermöglicht es, die Betätigungsfläche des Vergrößerungs-Schalters von einem Bereich der berührungs- und/oder druckempfindlichen Einrichtung zu bilden, der auf der Bildfläche optisch gekennzeichnet ist. Dadurch ist größtmögliche Flexibilität bei der Konzipierung der Anzeige- und Bedienelemente und -funktionen des Mensch-Maschine-Interface gewährleistet.

In einer vorteilhaften Ausgestaltung des erfindungsgemäßen Mensch-Maschine-Interface stellt der Controller im Vergrößerungsmodus die Bildinformation in einem virtuellen Bild bereit, von dem ein verlagerbarer Ausschnitt als am Display anzuzeigendes Bild an das Display übertragen wird.

Um den erforderlichen Rechenaufwand des Controllers für Neuberechnungen zu reduzieren, erweist es sich als günstig, wenn das gesamte virtuelle Bild in einem Grafikspeicherbereich gespeichert ist.

Bei der Vergrößerung des Bildes zu einem virtuellen Bild könnte es passieren, dass für die Bedienperson wichtige Information oder gewisse Schaltflächen nicht mehr am Display zu sehen sind. Um dies zu verhindern ist in einer Ausgestaltung der Erfindung vorgesehen, dass der Controller ein Bildelement-Überwachungsmittel aufweist, das überprüft, ob vordefinierte Bildelemente des virtuellen Bildes im aktuell am Display anzuzeigenden Ausschnitt liegen, und die Bildelemente gegebenenfalls so versetzt oder der am Display sichtbaren Bildinformation überlagert, dass sie im am Display sichtbaren Ausschnitt liegen.

In einer die Bedienbarkeit des erfindungsgemäßen Mensch-Maschine-Interface besonders erleichternden Ausgestaltung ist das virtuelle Bild durch Verlagern des am Display darzustellenden Ausschnitts horizontal und/oder vertikal über die Bildfläche scrollbar, wobei die Verlagerung des Ausschnitts des virtuellen Bildes in Übereinstimmung mit der Bewegung eines Fingers einer Bedienperson oder eines Zeigegeräts, ausgehend von einem vordefinierten oder beliebigen Punkt der Bildfläche erfolgt, indem der Controller die Fingeroder Zeigegerätbewegung aus den von der berührungs- und/oder druckempfindlichen Einrichtung empfangenen Signalen ermittelt und daraus die erforderliche Verlagerung des auf der Bildfläche sichtbaren Ausschnitts des virtuellen Bildes errechnet. Dieser Betriebsmodus stellt eine Kombination der Funktionen "Vergrößern" und "Verschieben" dar, die einerseits zum Erhalt der Gesamtübersicht beiträgt, indem eine möglichst große (wenngleich teilweise virtuelle) Darstellungsfläche erzielt wird, andererseits die Navigation in dieser Darstellungsfläche aber extrem vereinfacht wird.

In einer weiteren Ausgestaltung der Erfindung ist ein Scroll-Überwachungsmittel vorgesehen, das die Verlagerbarkeit des am Display anzuzeigenden Ausschnitts des virtuellen Bildes begrenzt, so dass vordefinierte Bildelemente immer am Display sichtbar sind. Damit kann verlässlich verhindert werden, dass für die Bedienperson wichtige Informationen oder Schaltflächen nicht sichtbar sind.

Für den Fall, dass Benutzer des erfindungsgemäßen Mensch-Maschine-Interface es vorziehen, den am Bildschirm dargestellten Bereich des virtuellen Bildes nicht zu scrollen, ist in einer alternativen Ausgestaltung der Erfindung vorgesehen, dass die Größe des virtuellen Bildes und damit die vergrößerte Darstellung der Bildinformation ein Vielfaches, vorzugsweise Zwei- oder Vierfaches, der Bildfläche beträgt, wobei zwischen einzelnen Seiten des virtuellen Bildes mittels Seitenwechsel-Schalter umgeschaltet werden kann.

Damit keine für den Benutzer wichtige Information übersehen werden kann, kann in einer Fortbildung der Erfindung auf der Bildfläche ein Informationselement eingeblendet werden, das auf Zustandsänderungen in einer der nicht sichtbaren Seiten des virtuellen Bildes hinweist.

In einer weiteren Ausgestaltung der Erfindung ist vorgesehen, dass der Controller nach vordefinierter Zeit automatisch vom Vergrößerungs-Modus in den nicht vergrößernden, normalen Betriebsmodus zurückkehrt.

Besonders hohe Ergonomie und Verlässlichkeit des vorgestellten Mensch-Maschine-Interface ist erreichbar, wenn die berührungs- und/oder druckempfindliche Einrichtung nach einem der Prinzipien von Lichtschranken, der Dämpfung oder Reflexion akustischer Wellen, der Veränderung eines elektrischen Widerstands, oder dem piezoelektrischen Effekt arbeitet.

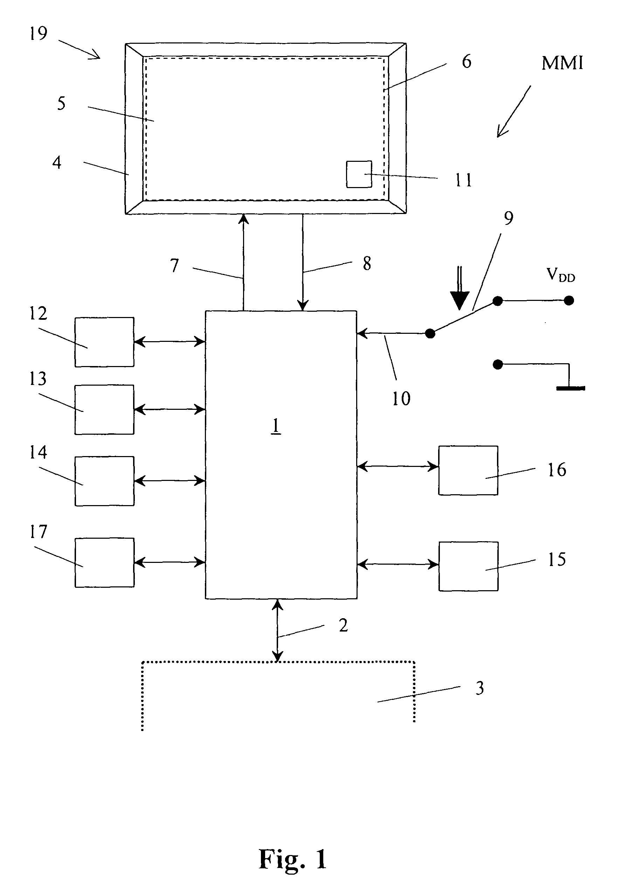

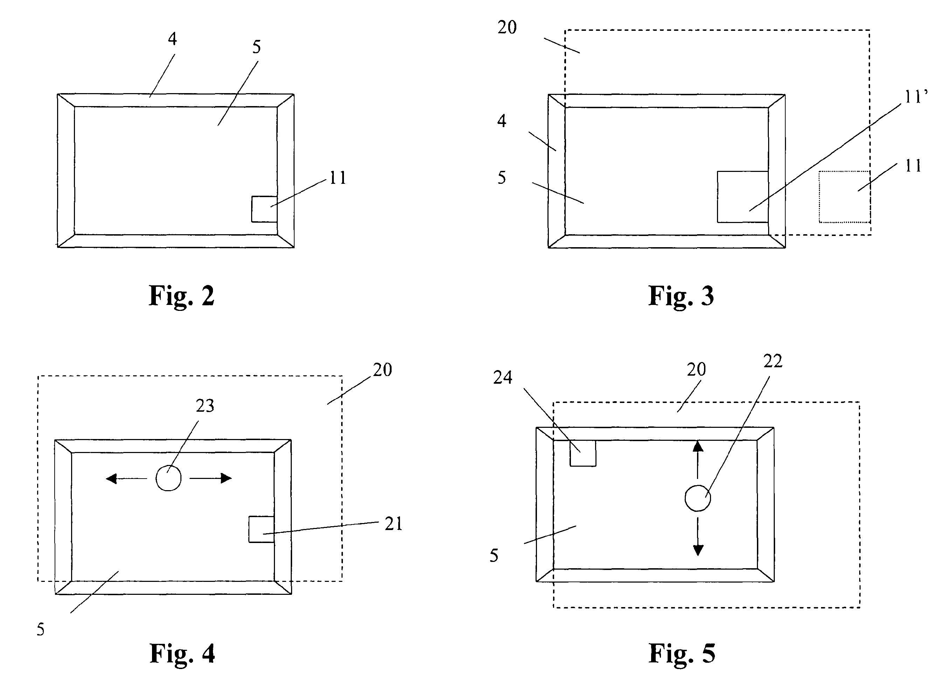

Im Folgenden werden Ausführungsbeispiele der Erfindung unter Bezugnahme auf die Zeichnungen in den Schutzbereich nicht einschränkender Weise näher erläutert. Dabei zeigt Fig. 1 ein schematisches Blockdiagramm eines erfindungsgemäßen Mensch-Maschine-Interface, und die Figuren 2 bis 6 zeigen verschiedene Darstellungen eines Bildes an einem Display.

Fig. 1 zeigt ein schematisches Blockdiagramm eines erfindungsgemäßen Mensch-Maschine-Interface MMI. Dieses umfasst einen Controller 1, der als Mikroprozessor mit integrierten oder über ein Bussystem anschließbaren Standard-Peripherieeinheiten, wie Programmspeicher, Datenspeicher, Input/Output-Ports etc., ausgeführt sein kann. Der Controller 1 kann auch ein herkömmlicher Personal-Computer oder ein anderes Computersystem sein. An den Controller 1 ist über einen Daten- und Steuerbus 2 ein System bzw. ein Gerät 3 angeschlossen, mit dem eine Bedienperson über das Mensch-Maschine-Interface MMI kommunizieren kann. Beispielsweise kann es sich bei dem System 3 um ein Flugleitsystem handeln. Das System 3 für sich ist nicht Teil der Erfindung und braucht daher nicht näher erläutert werden. Wesentlich ist nur, dass Informationen aus dem System 3 über das Mensch-Maschine-Interface MMI an eine Bedienperson übermittelt werden und Eingaben der Bedienperson über dass Mensch-Maschine-Interface MMI an das System 3 weitergeleitet werden. Das Mensch-Maschine-Interface MMI weist weiters ein Display 4 mit einer Bildfläche 5 zur Darstellung von Bildinformation auf, sowie eine vor der Bildfläche 5 angeordnete, transparente, berührungs- und/oder druckempfindliche Einrichtung 6. Display 4 und berührungs- und/oder druckempfindliche Einrichtung 6 sind ineinander integriert als Touch Panel 19 ausgeführt. Die auf der Bildfläche 5 darzustellende Bildinformation wird vom Controller 1 mittels Bild-Steuersignalen 7 an das Display 4 übertragen. Die Bildinformation kann alphanumerische Zeichen ebenso wie Graphik umfassen. Eingabesignale 8 werden von der berührungs- und/oder druckempfindlichen Einrichtung 6 an den Controller 1 übertragen und ausgewertet. Die Eingabesignale repräsentieren jenen Bereich der berührungs- und/oder druckempfindlichen Einrichtung 6, die von einer Bedienperson mittels eines (behandschuhten) Fingers oder Zeigegeräts berührt werden. Üblicherweise werden für die Bedienperson als Schaltflächen anzusehende Bereiche der berührungs- und/oder druckempfindlichen Einrichtung optisch auf der Bildfläche 5 durch entsprechende Farbgebung, Umrisse o. dergl. gekennzeichnet. Die Eingabesignale 8 können die Koordinaten (Pixelkoordinaten) des aktuell gedrückten Bereichs der berührungs- und/oder druckempfindlichen Einrichtung enthalten. Aus ergonomischen Gründen sowie hoher erzielbarer Verlässlichkeit ist vorgesehen, die Arbeitsweise der berührungs- und/oder druckempfindlichen Einrichtung 6 aus einem der im Folgenden erläuterten Prinzipien auszuwählen. Dies sind zum einen berührungsempfindliche Sensoren, wie z.B. Infrarot-Sensoren, die als Lichtschranken wirken. Ihr großer Vorteil ist, dass sie zu 100% lichtdurchlässig sind, da nur ein Rahmen, aber keine Glasplatte o. dergl. erforderlich ist. Eventuell nachteilig kann sich bei diesem Prinzip auswirken, dass eine Auslösung des Lichtschrankens durch jedes lichtundurchlässige Objekt, also auch durch Verschmutzungen möglich ist. Zum anderen sind vorteilhaft druckempfindliche Sensoren einsetzbar, die auf der Aussendung und Dämpfung oder Reflexion von Schallwellen basieren. Die Schallwelle kann innerhalb ("guided wave") oder auf der Oberfläche ("surface wave") einer Glasplatte geleitet und durch einen (weichen) Körper bedämpft werden. Vorteilhaft an diesem Prinzip ist die hohe Transparenz, da nur eine Glasplatte über der Bildfläche erforderlich ist. Eventuell bewirken jedoch schallharte Gegenstände (z.B. Zeigestifte, Kugelschreiber) keine Auslösung. Ein weiterer vorteilhaft einsetzbarer druckempfindlicher Sensor beruht auf der Veränderung eines elektrischen Widerstands, indem zwei elektrisch leitend beschichtete Platten (ITO-Schicht auf Glas und Polyester) isoliert einander gegenüberliegen. Durch Druck werden diese gegeneinander gepresst und verändern dadurch den elektrischen Widerstand der Anordnung. Unterscheidbar sind zwei Varianten, der analog resistive und der digital resistive Typ. Dieses Prinzip ist sehr einfach und daher sehr zuverlässig. Die Auslösung kann durch jeden Gegenstand erfolgen, ein wasserdichter Einbau ist leicht möglich. Ein aufwändigerer Drucksensor arbeitet nach dem Prinzip des piezoelektrischen Effekts. Dabei ist eine dickere (-4-6mm) Glasplatte an ihren Ecken durch Piezo-Elemente abgestützt - bei Druck auf das Glas kommt es zu Verformungen, welche in Form von Druckgradienten über die Piezo-Elemente in elektrische Spannung umgewandelt werden. Dann wird diese Spannung in einem Controller verglichen und daraus die Position errechnet, an der die Glasplatte gedrückt wurde. Vorteilhaft ist die durch die Glasfläche gegebene hohe Temperaturstabilität und hohe Transparenz; die Auslösung kann durch einen beliebigen Gegenstand erfolgen.

Erfindungsgemäß ist ein mit dem Controller 1 kommunizierender Vergrößerungs-Schalter 9, 11 vorgesehen, der eine solche Größe aufweist, dass er von einer einen Schutzhandschuh tragenden Bedienperson sicher betätigt werden kann.

In einer Ausgestaltung kann der Vergrößerungs-Schalter 9 einerseits als elektromechanischer Schalter oder Taster ausgebildet sein, der beispielsweise an eine Eingangsleitung 10 des Controllers 1 angeschlossen ist und je nach Schalter- bzw. Tasterstellung an die Eingangsleitung die Versorgungsspannung VDD oder Masse anlegt.

Andererseits kann der Vergrößerungs-Schalter 11 aber auch von einem Bereich der berührungs- und/oder druckempfindlichen Einrichtung 6 gebildet sein, der auf der Bildfläche 5 optisch als Betätigungsfläche gekennzeichnet ist. Berühren bzw. Drücken dieses Bereichs der berührungs- und/oder druckempfindlichen Einrichtung 6 führt zu entsprechenden Eingabesignalen 8 an den Controller 1, die dieser als Betätigen des Vergrößerungs-Schalters 11 interpretiert.

Um auch mit Schutzhandschuhen den Vergrößerungs-Schalter 9, 11 sicher bedienen zu können, sollte die Betätigungsfläche des Vergrößerungs-Schalters zumindest 2 cm, vorzugsweise zumindest 3 cm im Durchmesser betragen, oder im Einzelfall noch größer sein.

Wenn der Controller 1 das Betätigen des Vergrößerungs-Schalters 9, 11 erkennt, schaltet er in einen Vergrößerungs-Modus um, in dem er zumindest einen Ausschnitt der am Display darzustellenden Bildinformation vergrößert darstellt, wobei der Vergrößerungsfaktor vorzugsweise zumindest 30%, noch bevorzugter zumindest 50% beträgt. Der Vergrößerungs-Modus kann auch als Zoom-Funktion bezeichnet werden. Nach Betätigung des Vergrößerungs-Schalters werden zumindest wichtige Teile der Bildinformation vergrößert dargestellt und dadurch leichter ablesbar und gegebenenfalls bedienbar. Beispielsweise kann die vergrößert dargestellte Bildinformation eine Landkarte, eine alphanumerische Tastatur, die aufgrund der Vergrößerung wesentlich leichter bedient werden kann, oder Steuertasten anzeigen, die vergrößert ebenfalls wesentlich leichter zu bedienen sind. Die Vergrößerung der darzustellenden Bildinformation kann durch eine mit dem Controller 1 kommunizierende Bildvergrößerungsberechnungseinheit 12 erfolgen, die einerseits als Hardware-Einheit aufgebaut sein kann, der die Bildinformation zugeführt wird und die die vergrößerte Bildinformation an den Controller zurückliefert. Je nach Rechenleistung des Controllers und Geschwindigkeitsanforderung für den Bildaufbau kann die Bildvergrößerungsberechnungseinheit auch als im Controller 1 ablaufende Programmeinheit realisiert werden, die alle erforderlichen Vergrößerungsberechnungen durchführt.

In einer bevorzugten Ausgestaltung des erfindungsgemäßen Mensch-Maschine-Interface MMI wird, wenn sich der Controller 1 im Vergrößerungsmodus befindet, das gesamte am Display 4 darzustellende Bild, vom Controller 1 zu einem virtuellen Bild 20 vergrößert (siehe Fig. 3 bis 5), von dem jeweils ein verlagerbarer Ausschnitt als auf der Bildfläche 5 Displays 4 anzuzeigendes Bild an das Display übertragen wird. Um die Geschwindigkeit der Verlagerungsberechnungen für den anzuzeigenden Ausschnitt des virtuellen Bildes zu erhöhen, ist zweckmäßig das gesamte virtuelle Bild 20 in einem Bildspeicher 13 gespeichert.

Nun auch auf die Figuren 2 bis 5 Bezug nehmend ist in Fig. 2 das Display 4 mit der Bildfläche 5 dargestellt. Die einzige momentan an der Bildfläche 5 dargestellte Bildinformation ist der Vergrößerungs-Schalter 11. Nach Betätigen dieses Schalters 11 wird der Controller in den Vergrößerungs-Modus umgeschaltet und erzeugt das in Fig. 3 strichliert dargestellte virtuelle Bild 20, das gegenüber dem ursprünglichen Bild etwa um 50% vergrößert ist. Man erkennt, dass nur ein Ausschnitt des virtuellen Bildes auf der Bildfläche 5 darstellbar ist. Weiters erkennt man, dass durch die Vergrößerung der Vergrößerungs-Schalter 11 außerhalb des momentan auf der Bildfläche 5 dargestellten Ausschnitts des virtuellen Bildes 20 liegt. Somit wäre es ohne Zusatzmaßnahmen nicht mehr möglich, den Controller in seinen nicht vergrößernden Betriebsmodus zurückzuschalten. Um diesen Zustand ("Dead-Lock") zu verhindern, kann der Controller 1 mit einem Bildelement-Überwachungsmittel 15 versehen sein, das anhand von Pixel-Koordinaten überprüft, ob vordefinierte Bildelemente, die mit ihren Koordinaten in einer Bildelement-Tabelle 16 gespeichert sind, im aktuell am Display anzuzeigenden Ausschnitt des virtuellen Bildes liegen, und nötigenfalls - wie im gegenständlichen Beispiel - Bildelemente (hier den Vergrößerungs-Schalter 11) so versetzt bzw. der am Display sichtbaren Bildinformation überlagert, dass es im am Display sichtbaren Ausschnitt liegt (siehe versetzter Vergrößerungs-Schalter 11'). Das Bildelement-Überwachungsmittel 15 kann als im Controller 1 ablaufende Programmeinheit realisiert sein.

Um das gesamte virtuelle Bild, wenn auch nicht auf einmal, am Display darzustellen, kann der Controller so programmiert sein, dass der am Display darzustellende Ausschnitt des virtuellen Bildes horizontal (siehe Fig. 4) und/oder vertikal (siehe Fig. 5) scrollbar ist. Die Scroll-Funktion bietet besonders hohen Bedienerkomfort, wenn die Verlagerung des Ausschnitts des virtuellen Bildes 20 in Übereinstimmung mit der Bewegung (siehe Pfeile nach links, rechts in Fig. 4 und nach oben, unten in Fig. 5) eines Fingers einer Bedienperson oder eines Zeigegeräts, ausgehend von einem vordefinierten oder beliebigen Punkt 22, 23 des Displays, erfolgt, indem der Controller 1 die Finger- oder Zeigegerätbewegung aus den von der berührungs- und/oder druckempfindlichen Einrichtung empfangenen Eingangssignalen ermittelt und daraus die erforderliche Verlagerung des auf der Bildfläche 5 sichtbaren Ausschnitts des virtuellen Bildes 20 errechnet. Für die Bedienperson ergibt sich daraus der angenehme Eindruck, sie würde quasi irgendeinen Punkt des Bildes ergreifen und damit das gesamte Bild verschieben.

Um zu verhindern, dass durch das Scrollen wichtige Bedienelemente oder anzuzeigende Information von der Bildfläche verschwindet, kann ein Scroll-Überwachungsmittel 14 eingesetzt werden, das die Verlagerbarkeit des am Display anzuzeigenden Ausschnitts des virtuellen Bildes begrenzt, so dass vordefinierte Bildelemente immer am Display sichtbar bleiben. In Fig. 4 wird beispielsweise das weitere Scrollen des virtuellen Bildes 20 nach rechts vom Scroll-Überwachungsmittel 14 unterbunden, da sonst das Bildelement 21 aus der Bildfläche 5 verschwinden würde. In Fig. 5 wiederum wird beispielsweise das weitere Scrollen des virtuellen Bildes 20 nach oben unterbunden, da sonst das Bildelement 24 aus der Bildfläche 5 verschwinden würde.

Um den oben erwähnten "Dead-Lock"-Effekt zu verhindern, kann der Controller 1 weiters mit einem Timer 17 kommunizieren, der nach Ablauf einer vorgegebenen Zeitspanne seit Betätigen des Vergrößerungsschalters 9, 11 ein Zeitablaufsignal an den Controller 1 sendet, worauf der Controller 1 wieder in seinen normalen, nicht vergrößernden Betriebsmodus zurückkehrt.

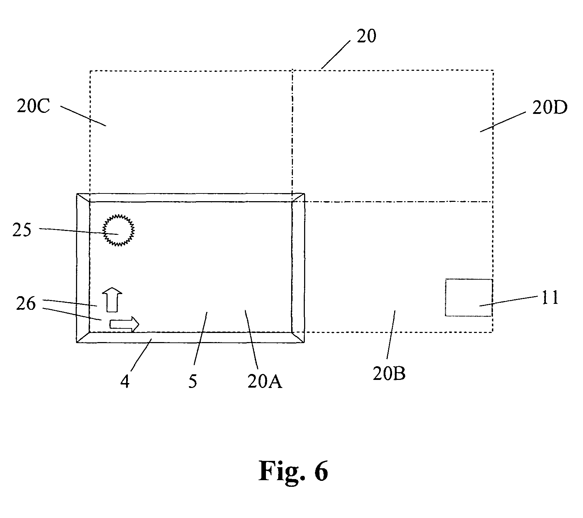

In Fig. 6 ist wiederum ein Display 4 mit einer Bildfläche 5 dargestellt. Ausgehend von der Darstellung von Fig. 2 sei angenommen, dass der Vergrößerungsschalter 11 betätigt wurde, worauf vom Controller eine Vergrößerung des Bildinhalts der Bildfläche 5 durchgeführt wurde, und zwar wurde ein virtuelles Bild 20 erzeugt, dessen Größe das Vierfache der Bildfläche 5 beträgt. Das virtuelle Bild lässt sich somit in einzelne Seiten 20A, 20B, 20C, 20D unterteilen, deren Größe jeweils der Bildfläche 5 entspricht. Auf der Bildfläche dargestellt ist im Moment die Seite 20A, eine Umschaltung auf die anderen Seiten 20B, 20C, 20D kann mittels Seitenwechsel-Schalter 26 erfolgen. Damit verlässlich verhindert wird, dass für den Benutzer wichtige Information übersehen wird, ist weiters vorgesehen, dass auf der Bildfläche 5 ein Informationselement 25 einblendbar ist, das auf Zustandsänderungen in einer der nicht sichtbaren Seiten 20B, 20C, 20D des virtuellen Bildes 20 hinweist.

## Patentansprüche

1. Mensch-Maschine-Interface (MMI), einen Controller (1), ein Display (4) mit einer Bildfläche (5) zur Darstellung von Bildinformation und eine vor der Bildfläche angeordnete, transparente, berührungs- und/oder druckempfindliche Einrichtung (6) umfassend, wobei der Controller (1) Bild-Steuersignale (7) an das Display (4) überträgt, um die Bildinformation als Bild auf der Bildfläche darzustellen, und Eingabesignale (8) von der berührungs- und/oder druckempfindlichen Einrichtung (6) empfängt, **gekennzeichnet durch** einen mit dem Controller kommunizierenden Vergrößerungs-Schalter (9, 11), der eine solche Größe aufweist, dass er von einer einen Schutzhandschuh tragenden Bedienperson sicher betätigt werden kann, wobei Betätigungssignale des Vergrößerungs-Schalters (9, 11) den Controller in einen Vergrößerungs-Modus schalten, in dem er zumindest einen Ausschnitt der auf der Bildfläche darzustellenden Bildinformation vergrößert darstellt, wobei der Vergrößerungsfaktor vorzugsweise zumindest 30%, noch bevorzugter zumindest 50% beträgt.

2. Mensch-Maschine-Interface nach Anspruch 1, **dadurch gekennzeichnet, dass** die Betätigungsfläche des Vergrößerungs-Schalters (9, 11) zumindest 2 cm, vorzugsweise zumindest 3 cm im Durchmesser beträgt.

3. Mensch-Maschine-Interface nach Anspruch 1 oder 2, **dadurch gekennzeichnet, dass** der Vergrößerungs-Schalter (9) als elektromechanischer Schalter oder Taster ausgebildet ist.

4. Mensch-Maschine-Interface nach Anspruch 1 oder 2, **dadurch gekennzeichnet, dass** die Betätigungsfläche des Vergrößerungs-Schalters (11) von einem Bereich der berührungsund/oder druckempfindlichen Einrichtung (6) gebildet wird, der auf der Bildfläche (5) des Display (4) optisch gekennzeichnet ist.

5. Mensch-Maschine-Interface nach einem der vorhergehenden Ansprüche, **dadurch gekennzeichnet, dass** der Controller (1) im Vergrößerungsmodus die Bildinformation in einem virtuellen Bild (20) bereitstellt, von dem ein verlagerbarer Ausschnitt als am Display (4) anzuzeigendes Bild an das Display übertragen wird.

6. Mensch-Maschine-Interface nach Anspruch 5, **dadurch gekennzeichnet, dass** das gesamte virtuelle Bild (20) in einem Bildspeicher (13) gespeichert ist.

7. Mensch-Maschine-Interface nach einem der Ansprüche 5 oder 6, **dadurch gekennzeichnet, dass** der Controller (1) ein Bildelement-Überwachungsmittel (15) aufweist, das überprüft, ob vordefinierte Bildelemente des virtuellen Bildes im aktuell am Display anzuzeigenden Ausschnitt liegen, und die Bildelemente gegebenenfalls so versetzt oder der am Display sichtbaren Bildinformation überlagert, dass sie im am Display sichtbaren Ausschnitt liegen.

8. Mensch-Maschine-Interface nach einem der Ansprüche 5 bis 7, wobei das virtuelle Bild (20) durch Verlagern des am Display darzustellenden Ausschnitts horizontal und/oder vertikal scrollbar ist, **dadurch gekennzeichnet, dass** die Verlagerung des Ausschnitts des virtuellen Bildes (20) in Übereinstimmung mit der Bewegung eines Fingers einer Bedienperson oder eines Zeigegeräts, ausgehend von einem vordefinierten oder beliebigen Punkt (22, 23) auf der Bildfläche (5) erfolgt, indem der Controller (1) die Finger- oder Zeigegerätbewegung aus den von der berührungs- und/oder druckempfindlichen Einrichtung (6) empfangenen Eingabesignalen (8) ermittelt und daraus die erforderliche Verlagerung des am Display sichtbaren Ausschnitts des virtuellen Bildes (20) errechnet

9. Mensch-Maschine-Interface nach einem der Ansprüche 5 bis 8, **gekennzeichnet durch** ein Scroll-Überwachungsmittel (14), das die Verlagerbarkeit des am Display anzuzeigenden Ausschnitts des virtuellen Bildes (20) begrenzt, so dass vordefinierte Bildelemente immer am Display sichtbar sind.

10. Mensch-Maschine-Interface nach einem der Ansprüche 5 oder 6, **dadurch gekennzeichnet, dass** die Größe des virtuellen Bildes (20) und damit die vergrößerte Darstellung der Bildinformation ein Vielfaches, vorzugsweise Zwei- oder Vierfaches, der Bildfläche (5) beträgt, wobei die Darstellung der einzelnen Seiten (20A, 20B, 20C, 20D) des virtuellen Bildes (20) auf der Bildfläche (5) mittels Seitenwechsel-Schalter (26) umschaltbar ist.

11. Mensch-Maschine-Interface nach Anspruch 10, **dadurch gekennzeichnet, dass** auf der Bildfläche (5) ein Informationselement (25) einblendbar ist, das auf Zustandsänderungen in einer der nicht sichtbaren Seiten (20B, 20C, 20D) des virtuellen Bildes (20) hinweist.

12. Mensch-Maschine-Interface nach einem der vorhergehenden Ansprüche, **dadurch gekennzeichnet, dass** der Controller (1) nach vordefinierter Zeit automatisch vom Vergrößerungs-Modus in den normalen Betriebsmodus wechselt.

13. Mensch-Maschine-Interface nach einem der vorhergehenden Ansprüche, **dadurch gekennzeichnet, dass** die berührungs- und/oder druckempfindliche Einrichtung (6) nach einem der Prinzipien von Lichtschranken, der Dämpfung oder Reflexion akustischer Wellen, der Veränderung eines elektrischen Widerstands, oder dem piezoelektrischen Effekt arbeitet.
